# EUROPÄISCHE PATENTSCHRIFT

(11) **EP 1 802 696 B1**
(45) Veröffentlichungstag und Bekanntmachung des Hinweises auf die Patenterteilung: **12.03.2014**
(21) Anmeldenummer: 05797381.0
(22) Anmeldetag: 07.10.2005
(51) Int. Cl.: C08L 25/12, C08K 7/14, C08L 51/04, C08L 51/08, C08L 55/02, C08L 67/00, C08L 69/00

(54) **GLASFASERVERSTÄRKTE POLYMER-ZUSAMMENSETZUNGEN**
GLASS FIBER-REINFORCED POLYMER COMPOSITIONS
COMPOSITIONS DE POLYMERES RENFORCEES AUX FIBRES DE VERRE

(30) Priorität: 11.10.2004 DE 102004049628; 27.08.2005 DE 102005040620
(43) Veröffentlichungstag der Anmeldung: 04.07.2007
(73) Patentinhaber: Bayer MaterialScience AG, 51368 Leverkusen (DE); Celstran GmbH, 65451 Kelsterbach (DE)
(72) Erfinder: WARTH, Holger, Mid Levels, Hong Kong SAR (CN); HARTIKAINEN, Juha, FI-06400 Porvoo (FI); LINDNER, Mathias, 67657 Kaiserslautern (DE)
(74) Vertreter: Klimiuk, Meike
(86) Internationale Anmeldenummer: PCT/EP2005/010818
(87) Internationale Veröffentlichungsnummer: WO 2006/040087

(56) Entgegenhaltungen:
- EP-A- 0 685 520
- EP-A- 0 737 706
- WO-A-91/06605
- WO-A-03/080725
- WO-A-2004/055107

## Beschreibung

Die Erfindung betrifft mit Langglasfasem verstärkte Polymer-Zusammensetzungen mit verbesserten mechanischen Eigenschaften sowie aus den Zusammensetzungen hergestellte Formkörper.

DE 10 232 485 A1 beschreibt ein Verfahren zur Herstellung glas- und/oder kohlenstofffaserverstärkte Formteile. Polyamide, Polyalkylenterephthalat und Polyphenylensulfid werden als Thermoplaste genannt. Die gemäß DE 10 232 485 A1 hergestellten verstärkten Polyamid-Zusammensetzungen zeichnen sich durch eine gute Biegespannung, Biegefestigkeit und Biege-Modul aus.

In WO 2004/055107 werden Zusammensetzungen beschrieben, die mindestens ein kautschukfreies Polymer mit mindestens einer Hydroxyl-, Säure-, oder Aminofunktionalität enthalten (S. 1, Z. 7-8), sowie mindestens eine Komponente mit mindestens 2 Isocyanatgruppen.

Aus der WO 2003/080725 sind glasfaseryerstärkte Zusammensetzungen auf Polyamidbasis bekannt, gepfropfte Acrylatkautschuke, Copolymere auf Basis von Styrol(meth)acrlynitril und Maleinsäureanhydrid, und optional ein zweites Copolymer auf Styrol(meth)acrylnitril-Basis enthalten.

WO 1991/006605 (D3) beschreibt Polymerzusammensetzungen enthaltend Polycarbonat, ein Styrol-Acrylnitril-Maleinsäureanhydrid-Terpolymer und Glasfasern, die darüber hinaus kleine Mengen ABS-Harz enthalten können,

Glasfaserverstärkte Polycarbonat-Formmassen sind ebenfalls bekannt. Sie zeichnen sich durch besondere Steifigkeit in Kombination mit geringer thermischer Ausdehnung aus. Im Praxiseinsatz weisen sie bei tiefen Temperaturen ein sprödes Bruchverhalten auf, was Einschränkungen oder aufwändigere Konstruktionen bei Sicherheitsbauteilen bedeuten kann.

Die Aufgabe der vorliegenden Erfindung ist die Bereitstellung von Zusammensetzungen, die eine ausgezeichnete Kombination von mechanischen Eigenschaften, insbesondere Zugfestigkeit, E-Modul und Schlag-Zähigkeit aufweisen.

Diese Aufgabe wurde gelöst durch das Ausrüsten von Thermoplasten, insbesondere Blends, mit Langglasfasern gemäß Anspruch 1 der vorliegenden Erfindung. Die Bauteile zeichnen sich insbesondere durch ihr Bruchverhalthen bei tiefen Temperaturen aus.

Gegenstand der vorliegenden Anmeldung sind daher Zusammensetzungen bestehend aus:
a)
   A) mindestens einem Polymer ausgewählt aus der Gruppe der Polycarbonate und Polyestercarbonate,_ und
   B) mindestens ein Pfropfpolymer enthaltend
      B.1 5 bis 95 wenigstens eines Vinylmonomeren auf
      B.2 95 bis 5 einer oder mehrerer Pfropfgrundlagen mit Glasübergangstemperaturen <10°C, und
      B.3 optional ein harzartiges, kautschukfreies, thermoplastisches Copolymer.
b) 0.1 bis 7 Gew.-% eines Terpolymers von Styrol Acrylnitril und Maleinsäureanhydrid und
c) Langglasfasern, wobei der Durchmesser des Faserfilaments 7 bis 25 µm beträgt, und
d) mindestens einem Additiv ausgewählt aus der Gruppe der Flammschutzmittel, Antidrippingmittel, Gleit- und Entformungsmittel, Nukleiermittel, Antistatika Stabilisatoren, weiteren Füll und Verstärkungsstoffe sowie Farbstoffe und Pigmente.

Im Zusammenhang mit dieser Erfindung werden die Bezeichnungen "Langglasfasern" und "Filamente" als Synonym verwendet und bezeichnen eine endlose oder kontinuierliche Glasfaser, deren länge lediglich durch die Kapazität der Spule, auf der das Filament gewickelt ist, begrenzt Ist Die Faserlänge der Filamente wird durch die Schnittlänge des Granulats bestimmt.

Die Zusammensetzungen enthalten vorzugsweise 30 bis 99, vorzugsweise 45 bis 95, besonders bevorzugt 50 bis 95, insbesondere 50 bis 90 Gew.-Teile Komponente A),
1 bis 50, vorzugsweise 1 bis 40, besonders bevorzugt 3 bis 35, insbesondere 5 bis 30 Gew.-Teile Komponente B),
0,1 bis 7, bevorzugt 0,3 bis 7, besonders bevorzugt 0,5 bis 6, insbesondere 0,8 bis 4 Gew.-% (bezogen auf die Summe der Gew.-Teile an A) und B), Terpolymer B.4,
und 3 bis 60, vorzugsweise 3 bis 50, besonders bevorzugt 5 bis 40, ganz besonders bevorzugt 7 bis 35 und insbesondere 7 bis 30 Gew.-% (bezogen auf 100 Gew.-Teile A) und B)) und Komponente C.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Vorzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 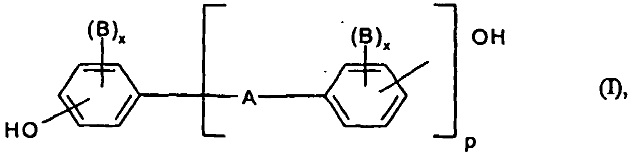 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 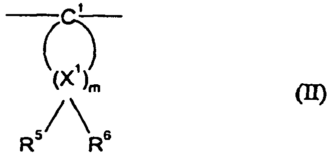 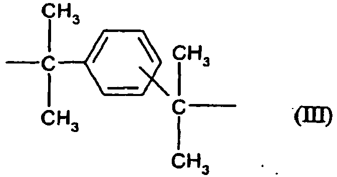
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol%, und 10 Mol%, bezogen auf die Molsumme der jeweils eingesetzten Diphenole.

Die thermoplastischen, aromatischen Polycarbonate und Polyestercarbonate haben mittlere Gewichtsmittelmolekulargewichte (M_{w}, gemessen z. B. durch Ultrazentrifuge oder Streulichtmessung) von 10.000 bis 200.000, vorzugsweise 15.000 bis 80.000.

Die thermoplastischen, aromatischen Polycarbonate und Polyestercarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.% (bezogen auf die Gesamtmenge an einzusetzenden Diphenolen) Polydiorganosiloxane mit Hydroxyaryloxy-Endgruppen eingesetzt werden. Diese sind bekannt (beispielsweise US 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mole Diphenole und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetra-chlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 80 Mol%, bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Erfindungsgemäß geeignete Polyamide sind bekannt oder nach literaturbekannten Verfahren herstellbar.

ErfindungsgemäB geeignete Polyamide sind bekannte Homopolyamide, Copolyamide und Mischungen dieser Polyamide. Es können dies teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexa-methylendiamin und/oder 2,4,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7 bis 12 Kohlenstoffatomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylendiamin, Bis-(4-aminocyclohexyl)-methan, Bis-(4-aminocyclohexyl)-propan, 3,3'-Dimethyl-4,4'-diamino-dicyclohexyl-methan, 3-Aminomethyl-3,5,5-trimethylcyclohexylamin, 2,5-und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten werden, sind geeignet, ferner Copolymere enthaltend ε-Aminocapronsäure, ω-Aminoundecansäure oder ω-Aminolaurinsäure oder ihren Lactamen.

Besonders geeignete amorphe Polyamide sind die Polyamide hergestellt aus Isophthalsäure, Hexamethylendiamin und weiteren Diaminen wie 4,4-Diaminodicyclohexylmethan, Iso-phorondiamin, 2,2,4- und/oder 2,4,4-Trimethylhexa-methylendiamin, 2,5- und/oder 2,6-Bis-(aminomethyl)-norbomen; oder aus Isophthalsäure, 4,4'-Diamino-dicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der Stellungsisomeren Diamindicyclohexalmethane eingesetzt werden, die sich zusammensetzen aus

| | |
|---|---|
| 70 bis 99 mol-% | des 4,4'-Diamino-Isomeren, |
| 1 bis 30 mol-% | des 2,4'-Diamino-Isomeren und |
| 0 bis 2 mol-% | des 2,2'-Diamino-Isomeren, |

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Polyamide können allein oder in beliebiger Mischung untereinander in Komponente A enthalten sein.

### Komponente B

Die Komponente B umfasst ein oder mehrere Pfropfpolymerisate von
B.1 5 bis 95, vorzugsweise 30 bis 90 Gew.%, wenigstens eines Vinylmonomeren auf
B.2 95 bis 5, vorzugsweise 70 bis 10 Gew.% einer oder mehrerer Pfropfgrundlagen mit Glasübergangstemperaturen <10°C, vorzugsweise <0°C, besonders bevorzugt < -20°C.

Die Pfropfgrundlage B.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 um.

Monomere B.1 sind vorzugsweise Gemische aus
B.1.1 50 bis 99 Gew.-Teilen Vinylaromaten und/oder kemsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.%, vorzugsweise mindestens 40 Gew.% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Geeignete Acrylatkautschuke gemäß B.2 der Polymerisate B sind vorzugsweise Polymerisate aus Acrylsäurealkylestern, gegebenenfalls mit bis zu 40 Gew.%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Bevorzugte "andere" polymerisierbare, ethylenisch ungesättigte Monomere, die neben den Acrylsäureester gegebenenfalls zur Herstellung der Pfropfgrundlage B.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Als geeignete Silikonacrylatkautschuke kommen solche zum Einsatz, deren Herstellung in der JP 08 259 791-A, JP 07 316 409-A und EP-A 0 315 035 beschrieben werden. Die diesbezüglichen Inhalte dieser Anmeldungen werden hiermit in diese Anmeldung übernommen.

Die Polyorganosiloxan-Komponente im Silikonacrylat-Kompositkautschuk kann durch Umsetzung eines Organosiloxans und eines multifunktionalen Vernetzungsmittels in einem Emulsionspolymerisationsprozess hergestellt werden. Es ist weiterhin möglich, über Zusatz geeigneter ungesättigter Organosiloxane pfropfaktive Stellen in den Kautschuk einzufügen.

Das Organosiloxan ist im Allgemeinen cyclisch, wobei die Ringstrukturen bevorzugt 3 bis 6 Si-Atome enthalten. Beispielhaft seien genannt Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan, Octaaphenylcyclotetrasiloxan, welche allein oder in Mischung von 2 oder mehr Verbindungen eingesetzt werden können. Die Organosiloxankomponente sollte am Aufbau des Silikonanteils im Silikonacrylatkautschuk zu mindestens 50 Gew.-%, bevorzugt mindestens 70 Gew.-% bezogen auf den Silikonanteil im Silikonacrylatkautschuk beteiligt sein.

Als Vernetzungsmittel werden im Allgemeinen 3- oder 4-funktionelle Silanverbindungen eingesetzt. Beispielhaft hierfür seien als besonders bevorzugt genannt: Trimethoxymethylsilan, Triethoxyphenylsilan, Tetramethoxysilan, Tetraethoxysilan, Tetra-n-propoxysilan, Tetrabutoxysilan. 4 funktionelle Verzweigungsmittel, insbesondere Tetraethoxysilan. Die Menge an Verzweigungsmittel beträgt im Allgemeinen 0 bis 30 Gew.-% (bezogen auf die Polyorganosiloxankomponente im Silikonacrylatkautschuk).

Zum Einbringen pfropfaktiver Stellen in die Polyorganosiloxankomponente des Silikonacrylatkautschuks kommen bevorzugt Verbindungen zum Einsatz, die eine der folgenden Strukturen bilden:

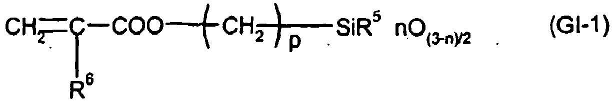

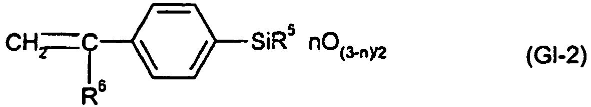

CH₂=CH-SiR⁵ nO_{(3-n)/2} (GI-3)

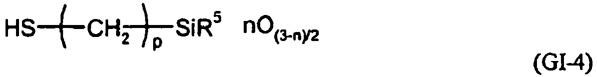

wobei
- R⁵: Methyl, Ethyl, Propyl oder Phenyl,
- R⁶: Wasserstoff oder Methyl,
- n: 0, 1 oder 2 und
- p: eine Zahl von 1 bis 6
bedeuten.

(Meth)acryloyloxysilan ist eine bevorzugte Verbindung zur Bildung der Struktur (GI 1). Bevorzugte (Meth)acryloyloxysilane sind beispielsweise β-Methacryloyloxyethyl-dimethoxy-methylsilan, γ-Methacryloyl-oxy-propylmethoxy-dimethyl-silan, γ-Methacryloyloxypropyl-dimethoxymethyl-silan, γ-Methacryloyloxypropyl-trimethoxy-silan, γ-Methacryloyloxy-propyl-ethoxydiethyl-silan, γ-Methacryloyloxypropyl-diethoxy-methyl-silan, γ-Methacryloyloxy-butyl-diethoxy-methyl-silan.

Vinylsiloxane, insbesondere Tetramethyl-tetravinyl-cyclotetrasiloxan sind fähig die Sturktur GI-2 zu bilden.

Beispielsweise p-Vinylphenyl-dimethoxy-methylsilan kann Struktur GI-3 bilden. γ-Mercaptopropyldimethoxy-methylsilan, γ-Mercaptopropylmethoxy-dimethylsilan, γ-mercaptopropyldiethoxymethylsilan usw. können Sturktur (GI-4) bilden.

Die Menge an diesen Verbindungen beträgt 0 bis 10, vorzugsweise 0,5 bis 5 Gew.-% (bezogen auf die Polyorganosiloxankomponente).

Die Acrylat-Komponente im Silikonakrylat-Kompositkautschuk kann aus Alkyl(meth)acrylaten, Vernetzungsmitteln und pfropfaktiven Monomereinheiten hergestellt werden.

Als Alkyl(meth)acrylate seien beispielhaft und bevorzugt genannt Alkylacrylate wie Methylacrylat, Ethylacrylat, n-Propylacrylat, n-Butylacrylat, 2-Ethylhexylacrylat und Alkylmethacrylate wie Hexylmethacrylat, 2-Ethylhexylmethacrylat, n-Laurylmethacrylat und in besonders bevorzugter Weise n-Butylacrylat.

Als Vernetzungsmittel kommen multifunktionelle Verbindungen zum Einsatz. Es seien beispielhaft hierfür genannt: Ethylenglycoldimethacrylat, Propylenglycoldimethacrylat, 1,3-Butylenglycoldimethacrylat und 1,4-Butylenglykoldimethacrylat.

Zum Einfügen pfropfaktiver Stellen kommen beispielsweise folgende Verbindungen, allein oder in Mischung, zum Einsatz: Allylmethacrylat, Triallylcyanurat, Triallylisocyanurat, Allylmethacrylat. Allylmethacrylat kann auch als Vernetzungsmittel fungieren. Diese Verbindungen werden in Mengen von 0,1 bis 20 Gew.-%, bezogen auf die Acrylatkautschuk-Komponente im Silikonacrylat-Kompositkautschuk eingesetzt.

Methoden zur Herstellung der bevorzugt in den erfindungsgemäßen Zusammensetzungen eingesetzten Silikonacrylatkompositkautschuke sowie dessen Pfropfung mit Monomeren werden beispielsweise beschrieben in US-A 4 888 388, JP 08 259 791 A2, JP 07 316 409A und EP-A 0 315 035. Als Pfropfgrundlage B.2 für das Pfropfpolymer B kommen sowohl solche Silikonacrylat-Kompositkautschuke in Frage, deren Silikon- und Acrylatkomponenten eine Kern-Schale-Struktur bilden, als auch solche, die ein Netzwerk bilden, in denen Acrylat- und Silikonkomponente völlig miteinander durchdrungen sind ("interpenetrating network").

Die Pfropfpolymerisation auf die zuvor beschriebene Pfropfgrundlagen kann in Suspension, Dispersion oder Emulsion durchgeführt werden. Bevorzugt ist die kontinuierliche oder diskontinuierliche Emulsionspolymerisation. Diese Pfropfpolymerisation wird mit Radikalinitiatoren durchgeführt (z.B. Peroxiden, Azoverbindungen, Hydroperoxiden, Persulfaten, Perphosphaten) und gegebenenfalls unter Einsatz von anionischen Emulgatoren, z.B. Carboxoniumsalzen, Sulfonsäuresalzen oder organischen Sulfaten. Dabei bilden sich Pfropfpolymerisate mit hohen Pfropfausbeuten, d.h. ein großer Anteil des Polymerisates der Pfropfmonomeren wird an den Kautschuk chemisch gebunden.

Für den Aufbau der Pfropfhülle B.1 kommen vorzugsweise Gemische aus
B.1.1 0 bis 80 Gew.-%, bevorzugt 0 bis 50 Gew.-%, insbesondere 0 bis 25 Gew.-% (bezogen auf die Pfropfhülle) Vinylaromaten oder kemsubstituierten Vinylaromaten (wie beispielsweise Styrol, α-Methylstyrol, p-Methylstyrol), inylcyaniden (ungesättigte Nitrile wie Acrylnitril und Methacrylnitril) und
B.1.2 100 bis 20 Gew.-%, bevorzugt 100 bis 50 Gew.-%, insbesondere 100 bis 75 Gew.-% (bezogen auf die Pfropfhülle) Monomeren ausgewählt aus der Gruppe der (Meth)Acrylsäure-(C₁-C₈)-Alkylester (wie Methylmethacrylat, n-Butylacrylat, t-Butylacrylat) und Derivate (wie Anhydride und Imide) ungesättigter Carbonsäuren (wie Maleinsäureanhydrid und N-Phenyl-Maleinimid)
zum Einsatz.

Besonders bevorzugt besteht die Pfropfhülle aus einem oder einer Mischung mehrerer reiner (Meth)Acrylsäure-(C₁-C₈)-Alkylester, insbesondere aus reinem Methylmethacrylat.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann weiterhin ein oder mehrere thermoplastische Vinyl(Co)Polymerisate B.3 umfassen.

Geeignet sind als Vinyl(Co)Polymerisate B.3 Polymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigte Carbonsäuren sowie Derivate (wie Anhydride und Imide) ungesättigter Carbonsäuren. Insbesondere geeignet sind (Co)Polymerisate aus
B.3.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-(C₁ bis C₈)-Alkylester wie Methylmethacrylat, Ethylmethacrylat), und
B.3.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-(C₁-C₈)-Alkylester (wie Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate B.3 sind harzartig, thermoplastisch und kautschukfrei.

Besonders bevorzugt ist das Copolymerisat aus B.3.1 Styrol und B.3.2 Acrylnitril.

Besonders bevorzugt sind weiterhin Terpolymere B.4 von Styrol, Acrylnitril und Maleinsäureanhydrid. Die Menge an Maleinsäureanhydrid im Terpolymer beträgt im Allgemeinen 0,2 bis 5, vorzugsweise 0,1 bis 1,5 Mol-% (vgl. auch EP-A 785 234). Die Terpolymere werden bevorzugt als Verträglichkeitsvermittler eingesetzt. Die Zusammensetzungen enthalten im Allgemeinen 0,1 bis 10, bevorzugt 0,3 bis 7, besonders bevorzugt 0,5 bis 6, insbesondere 0,8 bis 4 Gew.-% (bezogen auf A und B) Terpolymer B.4.

Die (Co)Polymerisate gemäß B.3 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

### Komponente C

Als Komponente C werden Langglasfasern eingesetzt, die eine endlose oder kontinuierliche Glasfaser darstellen, deren Länge lediglich durch die Kapazität der Spule, auf der das Filament gewickelt ist, begrenzt ist. Die resultierende Faserlänge im thermoplastischen Granulat wird durch die Schnittlänge des Granulats bestimmt, d.h. die Schnittlänge des Granulats ist 5 bis 50 mm, vorzugsweise 5 bis 30 mm, besonders bevorzugt 7 bis 25 mm (Der Ausdruck "Granulat" bezeichnet im Zusammenhang mit der Erfindung die Kunstoff-Pellets. Granulat ist die übliche Form in der thermoplastische Zusammensetzungen mit oder ohne Additiven kommerziell verfügbar sind). Typischerweise hat ein Faserfilament einen Durchmesser von 7 bis 25, vorzugsweise 7 bis 21 Mikrometer.

Die Langglasfasern können mit einer sog. Schlichte oberflächenmodifiziert sein und sind mit den eingesetzten Thermoplasten oder Thermoplast-Blends durchtränkt oder imprägniert. Um gute mechanische Eigenschaften im resultierenden Glasfaser-haltigen Granulat und vor allem in dem daraus hergestellten Bauteil zu gewährleisten, soll eine möglichst gute Benetzung bzw. Imprägnierung erreicht werden. Imprägniertechniken sind beispielsweise in WO 95/28266 und US 6.530.246 B1 beschrieben.

Die Zusammensetzungen können weitere Zusatzstoffe (Komponente D) enthalten. So können sie durch Zusatz geeigneter Additive flammwidrig ausgerüstet sein (insbesondere Polycarbonatbasierende Zusammensetzungen). Beispielhaft seien als Flammschutzmittel Halogenverbindungen, insbesondere auf Basis von Chlor und Brom sowie Phosphor enthaltende Verbindungen genannt.

Bevorzugt enthalten die Zusammensetzungen phosphorhaltige Flammschutzmittel aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Flammschutzmitteln eingesetzt werden.

Bevorzugte Mono- und oligomere Phosphor- bzw. Phosphonsäureester sind Phosphorverbindungen der allgemeinen Formel (IV) 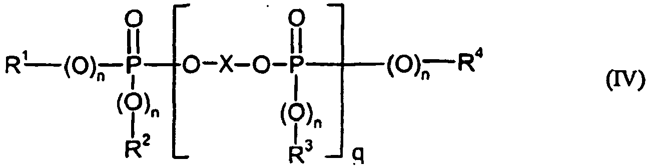 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂-Aralkyl,
- n: unabhängig voneinander, 0 oder 1
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30. Die Komponenten der Formel (IV) können auch als Mischungen vorliegen, die q-Werte sind dann zahlengemittelt von 0,3 bis 20, besonders bevorzugt 0,5 bis 10, insbesondere 0,5 bis 6.
- X: steht besonders bevorzugt für 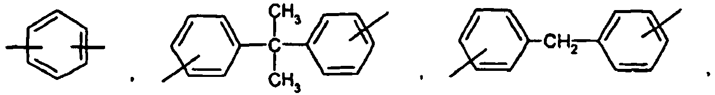 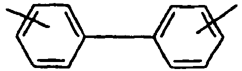 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Die Zusammensetzungen enthalten Flammschutzmittel im Allgemeinen in einer Menge von 0,5 bis 25, vorzugsweise 1 bis 20 Gew.-% bezogen auf (100 Teile A) und B)).

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des weiteren lässt sich mit diesen Flammschutzmitteln eine besonders hohe Wärmeformbeständigkeit erzielen.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Komponente D Formel (IV) sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Als weitere Flammschutzmittel können organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonät, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Die Flammschutzmittel werden oft in Kombination mit sogenannten Antidrippingmitteln verwendet, welche die Neigung des Materials zum brennenden Abtropfen im Brandfall vorringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Fluorierte Polyolefine sind bekannt und beispielsweise in der EP-A 0 640 655 beschrieben. Sie werden zum Beispiel unter der Marke Teflon^{®} 30N von DuPont vertrieben.

Die fluorierten Polyolefine können sowohl in reiner Form als auch in Form einer koagulierten Mischung von. Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im Allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefm von 5 bis 95 Gew.%, vorzugsweise 7 bis 60 Gew.%.

Anti-Dripping-Mittel können in der erfindungsgemäßen Zusammensetzung in einer Menge von vorzugsweise 0,05 bis 5 Gew.-%, besonders bevorzugt 0,1 bis 1 Gew.-% und in am meisten bevorzugter Weise 0,1 bis 0,5 Gew.-% (bezogen auf A) und B)) enthalten sein.

Die erfindungsgemäßen Formmassen können weiterhin wenigstens eines der üblichen Additive, wie Gleit- und Entformungsmittel, beispielsweise Pentaerythrittetra-stearat, Nukleiermittel, Antistatika, Stabilisatoren, und über die anorganischen Materialien mit dem ausgewählten Aspektverhältnis hinaus anorganische Materialien mit anderer Geometrie wie weitere Füll- und Verstärkungsstoffe sowie Farbstoffe und Pigmente enthalten.

Die Komponenten A) und B) und gegebenenfalls weitere Zusatzstoffe und Additive werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

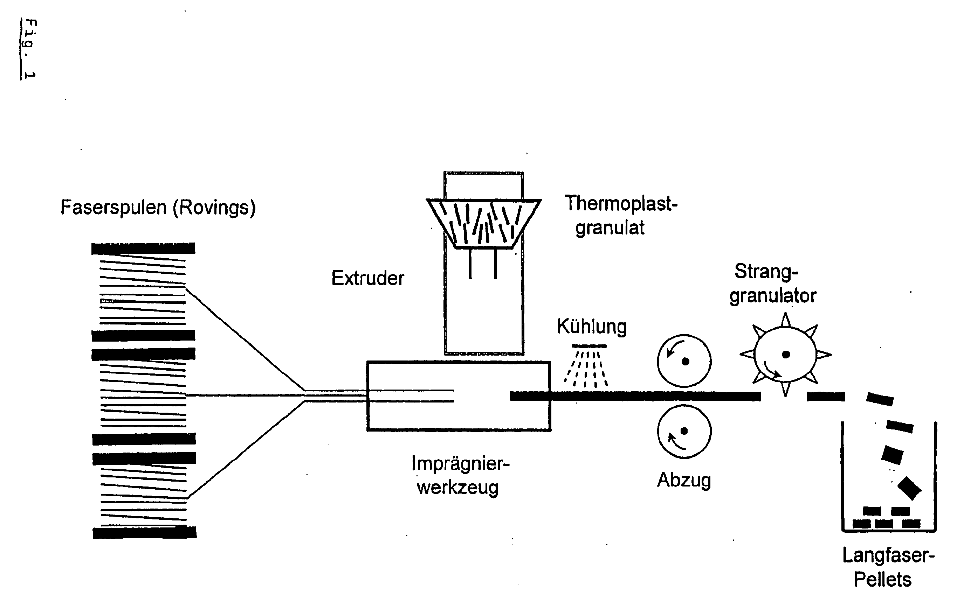

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur. Die Langglasfasern werden als kontiniuerliche sogenannte Rovings- oder Glasfaserbündel in einem Aufbau zugeführt, in den auch das geschmolzene Thermoplast bzw.Thermoplastblend zugeführt wird (vgl. WO 95/28266 und US 6.530.246 B1). Dies bedeutet, dass die Langglasfaser oder andere Fasern wie Kohlenstoff- bzw. Aramidfasern, kontinuierlich in den Benetzungs bzw. Imprägnierprozess unterzogen werden, (schematische Darstellung gemäß Fig. 1). Die Anzahl der einzelnen Filamente in einem Roving beträgt 200 bis 20 000, bevorzugt 300 bis 10 000, besonders bevorzugt 500 bis 2 000.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die Glasfasern liegen in den resultierenden Formteilen in einer mittleren Faserlänge von 0,5 bis 50 mm, bevorzugt 1,0 bis 40 mm, besonders bevorzugt von 1,5 bis 15 mm vor, wobei mindestens ein Anteil über 40 %, bevorzugt über 70 %, besonders bevorzugt über 80 % der Glasfasern eine Länge von über 1 mm aufweist.

Die Filamente sind im Langfaser-Granulat unidirektional angeordnet.

Die glasfaserverstärkten Thermoplaste gemäß der Erfindung besitzen gute mechanische Eigenschaften, die die von sogenannten kurzfaserverstärkten Thermoplaste übertreffen. Mit kurzfaserverstärkten Thermoplasten bezieht man sich auf Materialien, bei denen die Fasern als Schnittglass in einem Extruder mit den weiteren Komponenten vermischt werden. Typischerweise zeigen die kurzfaserverstärkten Thermoplaste eine Glasfaserlänge im Granulat von 0,2 bis 0,5 mm. Die Fasern liegen im Kurzfaser-Granulat wirr, d.h. nicht geordnet vor.

Beispiele für aus glasfaserverstärkten Thermoplasten gemäß der Erfindung hergestellte Formkörper sind Folien, Profile, Gehäuseteile jeder Art, z.B. für den Automobilinnenraum wie Instrumententafeln, Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendingen; auf dem Gebiet der Elektrotechnik wie für Schalter und Stecker.

Gegenstand der vorliegenden Erfindung ist somit auch ein Verfahren zur Herstellung von mit Langglasfasern verstärkte Formmassen enthaltend mindestens ein Polymer ausgewählt aus der Gruppe der Polyamide, Polycarbonate, Polyestercarbonate, Pfropfpolymerisate und Copolymere, sowie ein Terpolymer von Styrol, Acrylnitril und Maleinsäureanhydrid.

Bevorzugt ist das Verfahren zur Herstellung der erfindungsgemäßen thermoplastischen Zusammensetzungen in Form von Granulat dadurch gekennzeichnet, dass
i) ein Bündel an Langglasfasern, wobei der Durchmesser des Faserfilaments 7 bis 25 µm beträgt, mit der Schmelze von gegebenenfalls mindestens einem Polymer ausgewählt aus der Gruppe der Polyamide, Polycarbonate und Polyestercarbonate, mit der Schmelze mindestens eines Polymers ausgewählt aus der Gruppe der Pfropfpolymerisate und Copolymere, und mit der Schmelze eines Terpolymers von Styrol, Acrylnitril und Maleinsäureanhydrid benetzt wird,
ii) abgekühlt wird und
iii) das benetzte Faserbündel in Granulat geschnitten wird mit einer Schnittlänge von 5 bis 50 mm.

Besonders bevorzugt ist das Verfahren zur Herstellung der erfindungsgemäßen thermoplastischen Zusammensetzungen in Form von Granulat dadurch gekennzeichnet, dass
i) ein Bündel an Langglasfasern, wobei der Durchmesser des Faserfilaments 7 bis 25 µm beträgt, mit der Schmelze mindestens eines Polymers ausgewählt aus der Gruppe der Polyamide, Polycarbonate und Polyestercarbonate, mit der Schmelze mindestens eines Polymers ausgewählt aus der Gruppe der Pfropfpolymerisate und Copolymere, und mit der Schmelze eines Terpolymers von Styrol, Acrylnitril und Maleinsäureanhydrid benetzt wird,
ii) abgekühlt wird und
iii) das benetzte Faserbündel in Granulat geschnitten wird mit einer Schnittlänge von 5 bis 50 mm.

Die folgenden Beispiele dienen der weiteren Erläuterung der Erfindung.

### Beispiele

Die in den Tabellen 1 und 2 angegebenen und nachfolgend kurz erläuterten Komponenten werden auf einem 3-1-Innenkneter oder einer ZSK-25 bei etwa 240°C compoundiert. Die Formkörper werden auf einer Spritzgießmaschine Typ Arburg 270 E bei 240° - 260°C hergestellt.

Die Einarbeitung der Langglasfaser erfolgt gemäß WO 95/28266, vgl. auch Fig. 1.

### Komponente A1

Lineares Polycarbonat auf Basis Bisphenol A mit einer relativen Lösungsviskosität von 1,24, gemessen in CH₂Cl₂ als Lösungsmittel bei 25°C und einer Konzentration von 0,5 g/100 ml.

### Komponente A2

Lineares Polycarbonat auf Basis Bisphenol A mit einer relativen Lösungsviskosität von 1,28, gemessen in CH₂Cl₂ als Lösungsmittel bei 25°C und einer Konzentration von 0,5 g/100 ml.

### Komponente B1

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuks (mittlerer Teilchendurchmesser d₅₀ = 0,3 µm), hergestellt durch Emulsionspolymerisation.

### Komponente B2

Styrol/Acrylnitril-copolymerisat mit einem Styrol/Acrylnitril-Gewichtsverhältnis von 72:28 und einer Grenzviskosität von 0,55 dl/g (Messung in Dimethylformamid bei 20°C).

### Komponente B3

Metablen SRK200, Styrol/Acrylnitril gepfropfter Silikon-Butylacrylat-Kompositkautschuk der Fa. Mitsubishi Rayon Co. Ltd. Tokyo, Japan.

### Komponente B4

Terpolymer aus Styrol/Acrylnitril mit 66,4 Gew.-% Styrol, 32,5 Gew.-% Acrylnitril und 1,1 Gew.-% Maleinsäureanhydrid; Melt Index: 8,5 g/10 min (200°C, 5 kg Belastung).

### Komponente Cl

R43SX6 Type 30^{®} (Langglasfaser, durchschnittlicher Durchmesser 17 µm), Owens Corning *(Battice, Belgien)*

### Komponente C2

Glasfasern (CS 7942, Fa. Bayer AG, Leverkusen, Deutschland), geschnitten, durchschnittliche Länge ist 4,5 mm.

Als Additive werden Pentaerythritstearat (PETS) und Phosphitstabilisator verwendet.

Die folgende Zusammensetzungen A und B werden in den Beispielen 1 bis 10 verwendet:
- A:: 17,9 Gew.-Teile A1
43,0 Gew.-Teile A2
5,4 Gew.-Teile B3
23,3 Gew.-Teile B2
0,4 Gew.-Teile PETS
0,1 Gew.-Teile Phosphitstabilisator
- B:: 60,9 Gew.-Teile A1
14,3 Gew.-Teile B1
14,3 Gew.-Teile B2
0,5 Gew.-Teile PETS
0,1 Gew.-Teile Phosphitstabilisator

Die Zusammensetzung C ist eine Mischung enthaltend die Zusammensetzung A bzw. B und gegebenenfalls weitere Komponenten mit jeweils 20 Gew.-% Langglasfaser (Komponente C1) bzw. mit jeweils 10 bzw. 20 Gew.-% Glasfaser (Komponente C2), zu der die in Tabelle 1 genannten weiteren Komponenten zugesetzt werden. Da die Dosierung der Langglasfaser mit geringfügigen Abweichungen verbunden sein kann, wird der nach dem Mahlen bestimmte Faseranteil in Tabelle 1 und 2 angegeben.

Die Zugfestigkeit wird nach ISO EN 527 bestimmt, E-Modul nach ISO 527, Charpy-Schlagzähigkeit (ungekerbt) nach ISO 179 1eU.

**Tabelle 1 Polycarbonat-Zusammensetzungen und ihre Eigenschaften**

| Beispiel | Zusammensetzung C | | Zugfestigkeit MPa | E-Modul MPa | Ungekerb. Charpy kJ/m² | Auf gemahlenen Faseranteil normierte Werte¹⁾ Normierung auf 20 Gew.-% Glasfaser | | |
|---|---|---|---|---|---|---|---|---|
| | A bzw. B + ggf. B4 + B2 [Gew.-%] | + C1 bzw. C2 [Gew.-%] | | | | Zugfestigkeit MPa | E-Modul MPa | Ungekerb. Charpy kJ/m² |
| 1 (Vgl.) | A | 19,8 C1 | 91,70 | 7110 | 27 | 92,63 | 7182 | 27,27 |
| 2 | A + 1% B4 | 19,8 C1 | 94,20 | 7221 | 28,7 | 95,15 | 7294 | 28,99 |
| 3 | A + 2% B4 | 19,9 C1 | 93,90 | 7199 | 25,2 | 94,37 | 7235 | 25,33 |
| 4 | A + 3 % B4 | 20,2 C1 | 95,00 | 7334 | 25,6 | 94,06 | 7261 | 25,35 |
| 5 | A + 2% B4 + 5% B2 | 20,3 C1 | 99,00 | 7381 | 26 | 97,54 | 7272 | 25,62 |
| 6 | A + 2% B4 + 10% B2 | 20,5 C1 | 100,80 | 7701 | 23,9 | 98,34 | 7513 | 23,32 |
| 7 | A + 2 % B4 + 15 % B2 | 20,2 C1 | 99,20 | 7815 | 23,1 | 98,22 | 7738 | 22,87 |
| 8 | B + 2% B4 | 22,4 C1 | 101,40 | 7296 | 33,3 | 90,54 | 6514 | 29,73 |
| 9 (Vgl.) | B | 20 C2 | 77 | 5900 | 20 | 77 | 5900 | 20 |
| 10 (Vgl.) | A | 10 C2 | 75 | 4200 | 24 | 75 | 4200 | 24 |

| | | | | | | | | |
|---|---|---|---|---|---|---|---|---|
| 1) Die Normierung auf 20 Gew.-% Glasfaseranteil beruht auf der Annahme, dass bei geringen Abweichungen von 20 Gew.-% ein linearer Zusammenhang zwischen der Menge der Glasfaser und der Eigenschaft besteht. Da der Gehalt an Glasfaser im Granulat aufgrund von Schwankungen bei der Dosierung variieren kann, wird der "wahre" Gehalt an Glasfaser im Granulat angegeben (bestimmt am gemahlenen Rückstand einer veraschten Probe). | | | | | | | | |

**Tabelle 2: Zusammensetzungen und ihre Eigenschaften**

| Beispiel | B2 | B4 | C1 | ungekerbte Charpy | Zugfestigkeit | E-Modul | Bruchdehnung |
|---|---|---|---|---|---|---|---|
| | [Gew.-%] | [Gew.-%] | [Gew.-%] | [kJ/mm2] | [MPa] | [GPa] | [%] |
| 11 (Vgl.) | 66 | 0 | 33,6 | 19,4 | 127 | 10,8 | 1,35 |
| 12 | 65,9 | 0,5 | 33,6 | 26,8 | 148 | 11,3 | 1,52 |
| 13 | 65,0 | 1,0 | 34,0 | 29,1 | 150 | 12,0 | 1,59 |
| 14 | 64,6 | 1,5 | 33,9 | 31,8 | 148 | 11,9 | 1,53 |
| 15 | 65,5 | 2,0 | 32,5 | 32,1 | 151 | 11,8 | 1,59 |
| 16 | 65,1 | 2,5 | 32,4 | 31,6 | 155 | 12,0 | 1,63 |

## Patentansprüche

1. Zusammensetzung bestehend aus:
a)
A) mindestens einem Polymer ausgewählt aus der Gruppe der Polycarbonate und Polyestercarbonate, und
B) mindestens ein Pfropfpolymer enthaltend
B.1 5 bis 95 Gew.-% wenigstens eines Vinylmonomeren auf
B.2 95 bis 5 Gew.-% einer oder mehrerer Pfropfgrundlagen mit Glasübergangstemperaturen < 10°C, und
B.3 optional ein harzartiges, kautschukfreies, thermoplastisches Copolymer,
b) 0,1 bis 7 Gew.-% eines Terpolymers von Styrol, Acrylnitril und Maleinsäureanhydrid und
c) Langglasfasern, wobei der Durchmesser des Faserfilaments 7 bis 25 µm beträgt, und
d) mindestens einem Additiv ausgewählt aus der Gruppe der Flammschutzmittel, Antidrippingmittel, Gleit- und Entformungsmittel, Nukleiermittel, Antistatika, Stabilisatoren, weiteren Füll und Verstärkungsstoffe sowie Farbstoffe und Pigmente.

2. Zusammensetzung gemäß Anspruch 1, wobei die Menge an Maleinsäureanhydrid im Terpolymer b) 0,2 bis 5 Mol-% beträgt.

3. Zusammensetzungen gemäß Anspruch 1, wobei das Copolymer B.3 aus
B.3.1 50 bis 99 Gew.-Teilen Vinylaromaten und/oder kernsubstituierten Vinylaromaten und/oder Methacrylsäure-(C₁ bis C₈)-Alkylester und
B.3.2 1 bis 50 Gew.-Teilen Vinylcyanide und/oder (Meth)Acrylsäure-(C₁-C₈)-Alkylester und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid)
besteht.

4. Verfahren zur Herstellung thermoplastischer Zusammensetzungen in Form von Granulat **dadurch gekennzeichnet, dass**
i) ein Bündel an Langglasfasern, wobei der Durchmesser des Faserfilaments 7 bis 25 µm beträgt, mit der Schmelze von a)
A) mindestens einem Polymer ausgewählt aus der Gruppe der Polycarbonate und Polyestercarbonate, und
B) mindestens einem Pfropfpolymer enthaltend
B.1 5 bis 95 wenigstens eines Vinylmonomeren auf
B.2 95 bis 5 einer oder mehrerer Pfropfgrundlagen mit Glasübergangstemperaturen <10°C, und
B.3 optional ein harzartiges, kautschukfreies, thermoplastisches Copolymer,
b) 0,1 bis 7 Gew.-% eines Terpolymers von Styrol, Acrylnitril und Maleinsäureanhydrid, und
d) mindestens einem Additiv ausgewählt aus der Gruppe der Flammschutzmittel, Antidrippingmittel, Gleit- und Entformungsmittel, Nukleiermittel, Antistatika, Stabilisatoren, weiteren Füll und Verstärkungsstoffe sowie Farbstoffe und Pigmente,
benetzt wird,
ii) abgekühlt wird und
iii) das benetzte Faserbündel in Granulat geschnitten wird mit einer Schnittlänge von 5 bis 50 mm.

5. Verfahren gemäß Anspruch 4, wobei die Schnittlänge des Granulats in iii) 5 bis 30 mm beträgt.

6. Verfahren gemäß Anspruch 4, wobei die Schnittlänge des Granulats in iii) 7 bis 25 mm beträgt.

7. Verfahren gemäß Anspruch 4, wobei die Schnittlänge des Granulats in iii) 7 bis 21 mm beträgt.

8. Formkörper enthaltend eine Zusammensetzung gemäß einem der Ansprüche 1 bis 3, wobei die Langglasfasern C) im Formkörper mit einer mittleren Faserlänge von 0,5 bis 50 mm vorliegen.

9. Formkörper gemäß Anspruch 8, wobei die Langglasfasern C) mit einer mittleren Faserlänge von 1,5 bis 15 mm vorliegen.

10. Formkörper gemäß Anspruch 8, wobei mindestens ein Anteil über 40 % der Glasfasern eine Länge von über 1 mm aufweist.

11. Formkörper gemäß Anspruch 8, wobei mindestens ein Anteil über 70 % der Glasfasern eine Länge von über 1 mm aufweist.

12. Profile, Gehäuseteile, Platten, Rohre, Elektroinstallationskanäle, Fenster, Türen Schalter und Stecker enthaltend eine Zusammensetzung nach einem der Ansprüche 1 bis 3.

## Claims

1. Composition composed of:
a)
A) at least one polymer selected from the group of the polycarbonates and polyester carbonates, and
B) at least one graft polymer comprising B.1 from 5 to 95 wt.-% of at least one vinyl monomer
B.2 from 95 to 5 wt.-% of one or more graft bases with glass transition temperatures < 10°C, and
B.3 optionally a resin-like, rubber-free thermoplastic copolymer,
b) from 0.1 to 7% by weight of a terpolymer of styrene, acrylonitrile and maleic anhydride and
c) long glass fibres, where the diameter of the fibre filament is from 7 to 25 µm, and
d) at least one additive selected from the group of the flame retardants, antidrip agents, lubricants and mould-release agents, nucleating agents, antistatic agents, stabilizers, other fillers and reinforcing materials, and also dyes and pigments.

2. Composition according to Claim 1, where the amount of maleic anhydride in the terpolymer b) is from 0.2 to 5 mol%.

3. Compositions according to Claim 1, where the copolymer B.3 is composed of
B.3.1 from 50 to 99 parts by weight of vinylaromatics and/or ringsubstituted vinylaromatics and/or C₁-C₈-alkyl methacrylate and
B.3.2 from 1 to 50 parts by weight of vinyl cyanides and/or C₁-C₈-alkyl (meth)acrylate and/or unsaturated carboxylic acids (such as maleic acid) and/or derivatives (such as anhydrides and imides) of unsaturated carboxylic acids (for example maleic anhydride and N-phenylmaleimide).

4. Process for producing thermoplastic compositions in the form of pellets, **characterized in that**
i) a bundle of long glass fibres, where the diameter of the fibre filament is from 7 to 25 µm, is wetted with the melt of a)
A) at least one polymer selected from the group of the polycarbonates and polyester carbonates, and
B) at least one graft polymer comprising
B.1 from 5 to 95 of at least one vinyl monomer
B.2 from 95 to 5 of one or more graft bases with glass transition temperatures < 10°C, and
B.3 optionally a resin-like, rubber-free thermoplastic copolymer,
b) from 0.1 to 7% by weight of a terpolymer of styrene, acrylonitrile and maleic anhydride and
d) at least one additive selected from the group of the flame retardants, antidrip agents, lubricants and mould-release agents, nucleating agents, antistatic agents, stabilizers, other fillers and reinforcing materials, and also dyes and pigments,
ii) and is cooled and
iii) the wetted fibre bundle is chopped to give pellets with a chopped length of from 5 to 50 mm.

5. Process according to Claim 4, where the chopped length of the pellets in iii) is from 5 to 30 mm.

6. Process according to Claim 4, where the chopped length of the pellets in iii) is from 7 to 25 mm.

7. Process according to Claim 4, where the chopped length of the pellets in iii) is from 7 to 21 mm.

8. Moulding comprising a composition according to any of Claims 1 to 3, the average fibre length of the long glass fibres C) present in the moulding is from 0.5 to 50 mm.

9. Moulding according to Claim 9, where the average fibre length of the long glass fibres C) present is from 1.5 to 15 mm.

10. Moulding according to Claim 9, where the proportion of the glass fibres having a length above 1 mm is at least above 40%.

11. Moulding according to Claim 9, where the proportion of the glass fibres having a length above 1 mm is at least above 70%.

12. Profiles, housing parts, sheets, pipes, electrical-system ducts, windows, doors, switches and plugs comprising a composition according to any of Claims 1 to 3.

## Revendications

1. Composition, constituée par :
a)
A) au moins un polymère choisi dans le groupe constitué par les polycarbonates et les polyestercarbonates, et
B) au moins un polymère greffé contenant
B.1 5 à 95 % en poids d'au moins un monomère de vinyle sur
B.2 95 à 5 % en poids d'une ou de plusieurs bases de greffage présentant des températures de transition vitreuse < 10°C, et
B.3 éventuellement un copolymère thermoplastique, résineux, exempt de caoutchouc,
b) 0,1 à 7% en poids d'un terpolymère de styrène, d'acrylonitrile et d'anhydride de l'acide maléique et
c) des longues fibres de verre, le diamètre du filament de fibres valant 7 à 25 µm, et
d) au moins un additif choisi dans le groupe des agents ignifuges, des agents anti-goutte, des lubrifiants et des agents de démoulage, des agents de nucléation, des antistatiques, des stabilisateurs, d'autres charges et substances de renforcement ainsi que des colorants et des pigments.

2. Composition selon la revendication 1, la quantité d'anhydride de l'acide maléique dans le terpolymère b) étant de 0,2 à 5% en mole.

3. Compositions selon la revendication 1, le copolymère B.3 étant constitué par
B.3.1 50 à 99 parties en poids d'aromatiques de vinyle et/ou d'aromatiques de vinyle à noyau substitué et/ou d'esters (C₁-C₈)-alkyliques de l'acide méthacrylique et
B.3.2 1 à 50 parties en poids de vinylcyanures et/ou d'esters (C₁-C₈)-alkyliques de l'acide (méth)acrylique et/ou d'acides carboxyliques insaturés (tels que l'acide maléique) et/ou de dérivés (tels que des anhydrides et des imides) d'acides carboxyliques insaturés (par exemple l'anhydride de l'acide maléique et le N-phénylmaléinimide).

4. Procédé pour la préparation de compositions thermoplastiques sous forme de granulat, **caractérisé en ce que**
i) un faisceau de longues fibres de verre, le diamètre du filament de fibre valant 7 à 25 µm, est mouillé par la masse fondue de a)
A) au moins un polymère choisi dans le groupe constitué par les polycarbonates et les polyestercarbonates, et
B) au moins un polymère greffé contenant
B.1 5 à 95 d' au moins un monomère de vinyle sur
B.2 95 à 5 d'une ou de plusieurs bases de greffage présentant des températures de transition vitreuse < 10°C, et
B.3 éventuellement un copolymère thermoplastique, résineux, exempt de caoutchouc,
b) 0,1 à 7% en poids d'un terpolymère de styrène, d'acrylonitrile et d'anhydride de l'acide maléique, et
d) au moins un additif choisi dans le groupe des agents ignifuges, des agents anti-goutte, des lubrifiants et des agents de démoulage, des agents de nucléation, des antistatiques, des stabilisateurs, d'autres charges et substances de renforcement ainsi que des colorants et des pigments,
ii) on refroidit et
iii) on découpe le faisceau mouillé de fibres en granulat d'une longueur des morceaux coupés de 5 à 50 mm.

5. Procédé selon la revendication 4, la longueur des morceaux coupés du granulat dans iii) étant de 5 à 30 mm.

6. Procédé selon la revendication 4, la longueur des morceaux coupés du granulat dans iii) étant de 7 à 25 mm.

7. Procédé selon la revendication 4, la longueur des morceaux coupés du granulat dans iii) étant de 7 à 21 mm.

8. Corps façonné contenant une composition selon l'une quelconque des revendications 1 à 3, les longues fibres de verre C) se trouvant dans le corps façonné avec une longueur moyenne des fibres de 0,5 à 50 mm.

9. Corps façonné selon la revendication 9, les longues fibres de verre C) se trouvant avec une longueur moyenne des fibres de 1,5 à 15 mm.

10. Corps façonné selon la revendication 9, au moins une proportion supérieure à 40% des fibres de verre présentant une longueur supérieure à 1 mm.

11. Corps façonné selon la revendication 9, au moins une proportion supérieure à 70% des fibres de verre présentant une longueur supérieure à 1 mm.

12. Profilés, pièces de boîtier, plaques, tuyaux, chenaux pour installations électriques, fenêtres, portes, commutateurs et prises contenant une composition selon l'une quelconque des revendications 1 à 3.
